**Europäisches Patentamt**

**European Patent Office**

**Office européen des brevets**

(11) Veröffentlichungsnummer: **0 333 274**
**A2**

## (12) EUROPÄISCHE PATENTANMELDUNG

(21) Anmeldenummer: **89200618.0**

(51) Int. Cl.⁴: **H04N 5/10**

(22) Anmeldetag: **13.03.89**

(30) Priorität: **18.03.88 DE 3809076**

(43) Veröffentlichungstag der Anmeldung:
**20.09.89 Patentblatt 89/38**

(84) Benannte Vertragsstaaten:
**DE FR GB**

(71) Anmelder: **Philips Patentverwaltung GmbH**
**Wendenstrasse 35 Postfach 10 51 49**
**D-2000 Hamburg 1(DE)**

(84) **DE**

Anmelder: **N.V. Philips' Gloeilampenfabrieken**
**Groenewoudseweg 1**
**NL-5621 BA Eindhoven(NL)**

(84) **FR GB**

(72) Erfinder: **Riegel, Maximilian, Dipl.-Ing.**
**Herrnackerstrasse 65**
**D-8500 Nürnberg(DE)**

(74) Vertreter: **Peuckert, Hermann, Dipl.-Ing. et al**
**Philips Patentverwaltung GmbH**
**Wendenstrasse 35 Postfach 10 51 49**
**D-2000 Hamburg 1(DE)**

(54) **Schaltungsanordnung zur Auswertung eines Video-Synchronsignales.**

(57) Es wird eine Schaltungsanordnung zur Auswertung eines Video-Synchronsignales (VCS) beschrieben. Voraussetzung ist, daß das Video-Synchronsignal (VCS) aus Zeilenwechselimpulsen (H) besteht, deren regelmäßige Folge zwischen zwei Halbbildern durch einen Bildwechselimpuls unterbrochen ist und der zeitliche Abstand zwischen den Flanken eines Bildwechselimpulses und den Flanken des darauffolgenden ersten Zeilenwechselimpulses für jedes Halbbild charakteristisch ist.

Bei der beschriebenen Schaltungsanordnung beruht die Auswertung des Video-Synchronsignales auf einem Bildwechselimpuls und den auf ihn folgenden Zeilenwechselimpulsen. Diese Auswertung wird bewirkt durch einen Detektor (R, C, VG), durch den die Bildwechselimpulse im Video-Synchronsignal (VCS) detektiert werden. Weitere Mittel sind eine an den Ausgang des Detektors (R, C, VG) angeschlossene erste Logik (G1), mit der der Lauf eines von einem Oszillator (OS) getakteten ersten Zählers (Z1) gesteuert wird, zwei Decoder (D1, D2), die an die Zählstufen des ersten Zählers (Z1) angeschlossen sind und die einen Ausgangsimpuls abgeben, solange der Zählerstand einen für jeden Decoder vorbestimmten Zählbereich durchläuft, und eine an die Decoder (D1, D2) angeschlossene zweite Logik (G2, G3). Dieser Logik wird auch das Video-Synchronsignal (VCS) zugeführt. An ihren Ausgangsvariablen (H1, H2) ist erkennbar, ob einer der beiden Decoder (D1, D2) und welcher der beiden Decoder (D1,D2) während eines Impulses im Video-Synchronsignal (VCS) einen Ausgangsimpuls abgegeben hat.

FIG.2

## Schaltungsanordnung zur Auswertung eines Video-Synchronsignales.

Die Erfindung betrifft eine Schaltungsanordnung zur Auswertung eines Video-Synchronsignales, das aus Zeilenwechselimpulsen besteht, deren regelmäßige Folge zwischen zwei Halbbildern durch einen Bildwechselimpuls unterbrochen ist, und bei dem der zeitliche Abstand zwischen den Flanken eines Bildwechselimpulses und den Flanken des darauf folgenden ersten Zeilenwechselimpulses für jedes Halbbild charakteristisch ist.

Eine derartige Schaltungsanordnung ist aus der DE 34 43 925 C1 bekannt; sie wird z.B. bei einer Codierung von Videosignalen gebraucht. Ihre Hauptaufgabe besteht darin, in einem Video-Synchronsignal die Zeilenwechselimpulse, die Bildwechselimpulse sowie die Halbbilder zu erkennen und aus ihnen getrennte Steuersignale zu erzeugen, mit denen der Codierungsprozeß gesteuert wird.

Die bekannte Anordnung erzeugt zwei voneinander getrennte Signale, nämlich ein Halbbildsignal und ein Bildwechselsignal. Mit ihr werden die Impulspausen zwischen den sogenannten Vor-Ausgleichsimpulsen in einem Video-Synchronsignal nach der europäischen CCIR-Norm ausgemessen. Die Vor-Ausgleichsimpulse liegen zwischen dem letzten Zeilenwechselimpuls eines Halbbildes und einem Bildwechselimpuls. Die angesprochenen Impulspausen sind für jedes Halbbild charakteristisch.

Bei der bekannten Anordnung wird also das Impulspausenschema vor einem Bildwechselimpuls ausgenutzt, um die Nummer eines Halbbildes zu erkennen. Bei der Anwendung auf Video-Signale, die z.B. von einem Videorecorder kommen, hat das jedoch den Nachteil, daß die Wahrscheinlichkeit der Abgabe falscher Steuersignale sehr groß ist. Denn bei diesen Signalen treten am Ende eines Halbbildes gehäuft starke Störungen auf, so daß auch das Impulspausenschema vor dem Bildwechselimpuls in Mitleidenschaft gezogen wird, auf dem die Wirkungsweise der bekannten Anordnung basiert.

Der Erfindung liegt die Aufgabe zugrunde, eine Schaltungsanordnung mit den eingangs angegebenen Merkmalen anzugeben, bei der die Auswertung des Video-Synchronsignales auf einem Bildwechselimpuls und auf den Zeilenwechselimpulsen beruht, die auf den Bildwechselimpuls folgen.

Die Lösung dieser Aufgabe ist gekennzeichnet durch

1.1. einen Detektor, durch den die Bildwechselimpulse im Video-Synchronsignal detektiert werden,

1.2. eine an den Ausgang des Detektors angeschlossene erste Logik, mit der der Lauf eines von einem Oszillator getakteten Zählers gesteuert wird,

1.3. zwei Decoder, die an die Zählstufen des Zählers angeschlossen sind und die einen Ausgangsimpuls abgeben, solange der Zählerstand einen für jeden Decoder vorbestimmten Zählbereich durchläuft,

1.4. eine an die Decoder angeschlossene zweite Logik, der auch das Video-Synchronsignal zugeführt wird und an deren Ausgangsvariablen erkennbar ist, ob einer der beiden Decoder und welcher der beiden Decoder während eines Impulses im Video-Synchronsignal einen Ausgangsimpuls abgegeben hat.

Der in der Lösung erwähnte Zähler und die angeschlossenen Decoder erzeugen mit Hilfe der ersten Logik zwei verschiedene Zeitfenster definierter Breite und definierter relativer Lage zu einem Bildwechselimpuls. Die erwähnte zweite Logik ist eine Koinzidenzschaltung, die anzeigt, ob und in welches Zeitfenster ein Impuls des Video-Synchronsignales fällt. Ist das Video-Synchronsignal nicht gestört, so ist mit der Beantwortung der Frage, in welches Zeitfenster ein aufgetretener Impuls gefallen ist, gleichzeitig die Frage beantwortet, um welches Halbbild es sich handelt. Denn der aufgetretene Impuls kann nur ein Zeilenwechselimpuls gewesen sein, dessen Abstand von einem Bildwechselimpuls nach Voraussetzung für jedes Halbbild charakteristisch ist.

Eine vorteilhafte Ausgestaltung ist dadurch gegeben, daß die erste Logik aus einem Gatter besteht, das bei Vorliegen eines Impulses am Ausgang des Detektors oder bei Speicherung vorbestimmter Binärwerte in ausgewählten Zählstufen des Zählers einen Impuls abgibt, daß während dieses Impulses der Zähler läuft, wogegen bei Abwesenheit eines solchen Impulses der Zähler mit einer Zahl geladen wird, die zur Speicherung anderer als der vorbestimmten Binärwerte in den ausgewählten Zählstufen führt.

Mit dieser Ausgestaltung ist es möglich, Impulse am Ausgang des Detektors als Störimpulse unberücksichtigt zu lassen, sofern ihre Länge unter einer Mindestlänge liegt.

An dieser Stelle nicht erwähnte Ausgestaltungen der Erfindung sind in weiteren Unteransprüchen angegeben.

An Hand der Figuren und eines Ausführungsbeispieles soll die Erfindung näher erläutert werden.

Es zeigen:

Figur 1 Ausschnitte aus einem Video-Synchronsignal und

Figur 2 eine erfindungsgemäße Auswerteschaltung.

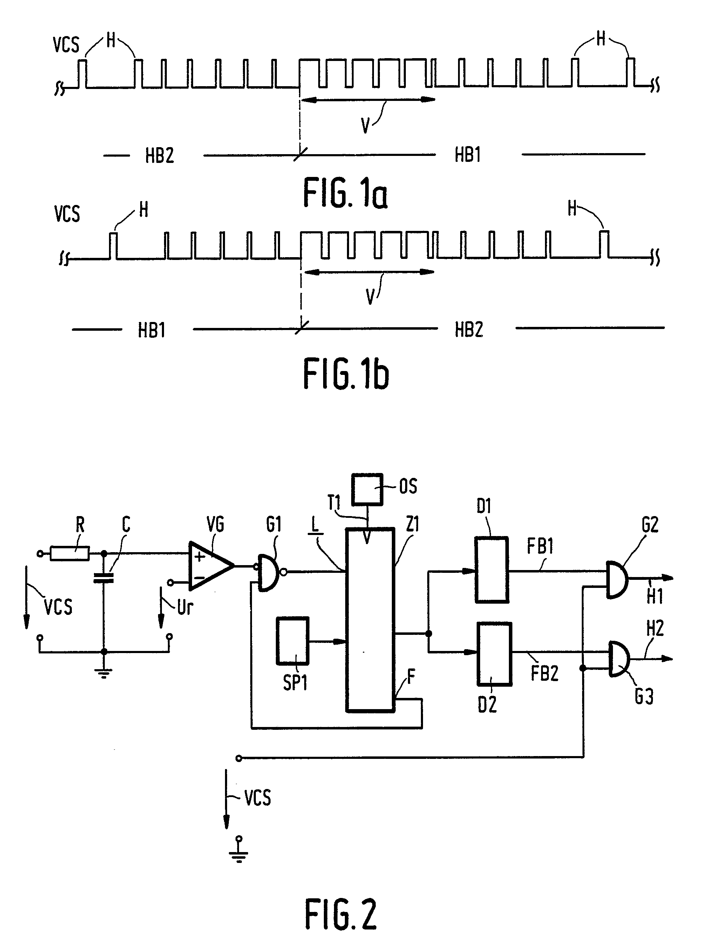

Die Zeitdiagramme a) und b) der Figur 1 sind Ausschnitte aus einem Video-Synchronsignal VCS, das der europäischen CCIR-Norm entspricht. Die Diagramme sind um eine Halbbild-Periode gegeneinander verschoben. Das Diagramm a) zeigt die Struktur des Video-Synchronsignales VCS beim Übergang von einem zweiten Halbbild HB2 zu einem ersten Halbbild HB1 und das Diagramm b) den entgegengesetzten Übergang. Jedes Halbbild beginnt mit einem modulierten Bildwechselimpuls V. Vor und hinter dem Bildwechselimpuls V enthält das Video-Synchronsignal jeweils fünf Ausgleichsimpulse (Vor- und Nachausgleichsimpulse); dann folgen die Zeilenwechselimpulse H mit gleichbleibendem Abstand voneinander. Wie ein Vergleich der Diagramme a) und b) zeigt, haben die Zeilenwechselimpulse H des ersten Halbbildes HB1 andere zeitliche Abstände von einem Bildwechselimpuls V als die Zeilenwechselimpulse H des zweiten Halbbildes HB2.

Die Abtrennung des Video-Synchronsignales von einem Videosignal ist dem Fachmann bekannt, wie z.B. die DE 23 49 684 B2 zeigt.

Mit einer Schaltung nach Figur 2 wird ein Signal gewonnen, das die Nummer des Halbbildes eines Videobildes angibt. Liegt das erste Halbbild HB1 eines Videobildes vor, so erscheint auf einer Leitung H1 ein Impuls von der Länge eines Zeilenwechselimpulses H, anderenfalls erscheint ein ebensolanger Impuls auf einer Leitung H2, wobei unterstellt worden ist, daß das Video-Synchronsignal VCS ungestört ist.

Am Eingang der Schaltung liegt ein Detektor, mit dem die Bildwechselimpulse V detektiert werden. Der Detektor besteht aus einem RC-Glied mit einem Widerstand R und einem Kondensator C sowie einem nachfolgenden Vergleicher VG, der die Spannung am Kondensator C mit einer Referenzspannung Ur vergleicht. Eine Logik, die im vorliegenden Ausführungsbeispiel aus einem NAND-Gatter G1 mit einem negierten Eingang besteht, steuert den Lauf eines Zählers Z1, der vom Takt T1 eines Oszillators OS getaktet wird. Die Frequenz des Oszillators OS legt das zeitliche Auflösungsvermögen der Anordnung fest; sie muß so hoch gewählt werden, daß z.B. zwei Zeilenwechselimpulse H noch sicher voneinander unterschieden werden können.

Im folgenden soll das Vorliegen eines Impulses mit dem Signalzustand HIGH und die Abwesenheit eines Impulses mit dem Signalzustand LOW symbolisiert werden.

Liegt der Ausgang des Vergleichers VG auf HIGH - der Detektor hat also einen längeren Impuls im Video-Synchronsignal VCS detektiert - so geht auch der Ausgang des Gatters G1 auf HIGH.

Wegen der Verbindung des Gatterausganges mit dem Freigabe-Eingang $\bar{L}$ des Zählers Z1 beginnt nun - also bei HIGH am Eingang $\bar{L}$ - der Zählvorgang. Er startet bei einer Dualzahl, die in einem Speicher SP1 gespeichert ist und mit der der Zähler Z1 zu einem weiter unten angegebenen Zeitpunkt geladen worden ist. Diese Zahl ist so gewählt, daß sie am Ausgang F der logischen Verknüpfung ausgewählter Zählstufen des Zählers Z1 zum Signalzustand HIGH führt. Dieser Zustand hält das Gatter G1 für die Impulse am Ausgang des Vergleichers VG offen. Der Zähler Z1 läuft also mindestens solange, solange der Impuls am Ausgang des Vergleichers VG andauert und der Signalzustand am Ausgang F aufgrund des Zählvorganges noch nicht von HIGH auf LOW gewechselt hat. Endet der Impuls am Ausgang des Vergleichers VG vor dem zuletzt angedeuteten Wechsel, so ändert sich das Signal am Eingang $\bar{L}$ von HIGH auf LOW. Das hat zur Folge, daß der Zählvorgang unterbrochen wird und mit dem nächsten Takt des Oszillators OS die im Speicher SP1 gespeicherte Zahl in den Zähler übernommen wird; der Anfangszustand, also der Zustand vor dem Auftreten des Impulses am Ausgang des Vergleichers VG, ist wieder hergestellt. Impulse am Ausgang des Vergleichers VG, die eine Mindestlänge nicht überschreiten, bleiben also unberücksichtigt; sie werden als Störimpulse angesehen.

Wird die Mindestlänge überschritten, geht der Signalzustand am Ausgang F von HIGH auf LOW. Der Zustand LOW schließt das Gatter G1 für Impulse, die vom Ausgang des Vergleichers VG kommen. Der Zähler Z1 läuft ohne Rücksicht auf Signaländerungen am Ausgang des Vergleichers VG weiter, bis wegen des Zählvorganges der Ausgang F auf HIGH geht.

Unter der Gesamtheit aller Zählerstände, die durchlaufen werden, solange der Ausgang F auf LOW liegt, gibt es zwei voneinander getrennte Bereiche von Zählerständen, in denen das Ausgangssignal FB1 eines ersten Decoders D1 bzw. das Ausgangssignal FB2 eines zweiten Decoders D2 den Zustand HIGH annimmt. Die Eingänge beider Decoder D1 und D2 sind mit den Stufen des Zählers Z1 verbunden. Jeder Zählbereich ist so gewählt, daß bei ungestörtem Betrieb genau ein Zeilenwechselimpuls H in ihn fällt, und zwar ein Zeilenwechselimpuls H eines ersten Halbbildes HB1 in den ersten Zählbereich und ein Zeilenwechselimpuls H eines zweiten Halbbildes HB2 in den zweiten Zählbereich.

Mit den Signalzuständen HIGH der Signale FB1 und FB2 werden UND-Gatter G2, G3 einer zweiten Logik geöffnet. Den Gattern G2 und G3 wird auch das Video-Synchronsignal VCS zugeführt.

Bei ungestörtem Betrieb erscheinen auf der Ausgangsleitung H1 des Gatters G2 Impulse mit dem zeitlichen Abstand eines Vollbildes. Jeder dieser Impulse zeigt an, daß am Eingang der Schaltung gerade Informationen über das erste Halbbild HB1 anliegen. Entsprechendes gilt für eine Ausgangsleitung H2, das Gatter G3 und das zweite Halbbild HB2.

Mit einem Zahlenbeispiel soll das Gesagte noch weiter konkretisiert werden. Entsprechend diesem Beispiel hat der Takt T1 des Oszillators OS eine Impulsfolgefrequenz von 2,5 MHz oder eine Periodendauer von 0,4 µs. Der zeitliche Abstand zweier Zeilenwechselimpulse H nach Figur 1 beträgt 64 µs, das sind 160 Perioden des Taktes T1. Die Breite eines Zeilenwechselimpulses H beträgt 4,7 µs, d.h., etwa 12 Perioden des Taktes T1. Die Fenster haben eine Breite von 64 Perioden des Taktes T1 und sind so gelegt, daß die Fenstermitten mit der Mitte eines Zeilenwechselimpulses H zusammenfällt, vorausgesetzt der Zeilenwechselimpuls hat seine Sollage. Der Zähler Z1 ist ein 12-stufiger Zähler, der - falls er nicht durch Steuersignale daran gehindert wird - zyklisch seinen Zählbereich durchläuft. Als Zähler wurde im vorliegenden Beispiel eine Kaskadenschaltung von drei Zählern des Typs 74163 gewählt.

Folgende Dual-Zahlen spielen beim Lauf des Zählers Z1 eine besondere Rolle:

a1:     1111 0011 0000
a2:     0000 0000 0000
a3:     0100 0100 0000
a4:     0100 0111 1111
a5:     0100 1000 0000
a6:     0100 1011 1111
a7:     1111 0000 0000

Die Zahl a1 ist die Zahl, die im Speicher SP1 gespeichert ist. Das Kriterium für die Öffnung des Gatters G1 ist das gleichzeitige Auftreten vier führender Einsen bei allen Zahlen, die im Laufe des Zählvorganges vom Zähler Z1 durchlaufen werden. Beim Erreichen der Zahl a2 wird das Gatter G1 geschlossen, weil dann erstmals keine vier Einsen an den führenden Stellen auftreten. Der Zähler läuft dann unabhängig von den Signalzuständen am Ausgang des Vergleichers VG weiter. Bei der Zahl a3 geht das Signal FB1 auf HIGH und öffnet damit das Fenster für den neunten Zeilenwechselimpuls H des ersten Halbbildes HB1 nach dem Bildwechselimpuls V; mit a4 wird dieses Fenster geschlossen, das Signal FB1 geht also wieder auf LOW zurück. Mit Erreichen der Zahl a5 nimmt das Signal FB2 den Zustand HIGH an; es wird das Fenster für den neunten Zeilenwechselimpuls H des zweiten Halbbildes HB2 geöffnet und bei a6 wieder geschlossen. Ist die Zahl a7 erreicht, wird das Gatter G1 für Impulse am Ausgang des Vergleichers VG geöffnet. Liegt ein Impuls an, so kann es nur ein Störimpuls sein. Ist seine Länge größer als 256 Perioden des Taktes T1, so ist eine Fehlsynchronisation un vermeidbar, sofern dies nicht an den Signalen auf den Leitungen H1 und H2 von einer nachfolgenden Schaltung erkannt und korrigiert wird. Anderenfalls - also wenn der Störimpuls kürzer ist - wird bei dessen Ende der Zähler Z1 wieder mit der Zahl a1 geladen. Beim nächsten Auftreten eines Impulses beginnt der Zähler dann von a1 an aufwärts zu zählen.

## Ansprüche

1. Schaltungsanordnung zur Auswertung eines Video-Synchronsignales, das aus Zeilenwechselimpulsen besteht, deren regelmäßige Folge zwischen zwei Halbbildern durch einen Bildwechselimpuls unterbrochen ist, und bei dem der zeitliche Abstand zwischen den Flanken eines Bildwechselimpulses und den Flanken des darauf folgenden ersten Zeilenwechselimpulses für jedes Halbbild charakteristisch ist,
gekennzeichnet durch,

1.1. einen Detektor (R, C, VG), durch den die Bildwechselimpulse im Video-Synchronsignal (VCS) detektiert werden,

1.2. eine an den Ausgang des Detektors (R, C, VG) angeschlossene erste Logik (G1), mit der der Lauf eines von einem Oszillator (OS) getakteten Zählers (Z1) gesteuert wird,

1.3. zwei Decoder (D1, D2), die an die Zählstufen des Zählers (Z1) angeschlossen sind und die einen Ausgangsimpuls abgeben, solange der Zählerstand einen für jeden Decoder vorbestimmten Zählbereich durchläuft,

1.4. eine an die Decoder (D1, D2) angeschlossene zweite Logik (G2, G3), der auch das Video-Synchronsignal (VCS) zugeführt wird und an deren Ausgangsvariablen (H1, H2) erkennbar ist, ob einer der beiden Decoder (D1, D2) und welcher der beiden Decoder (D1, D2) während eines Impulses im Video-Synchronsignal (VCS) einen Ausgangsimpuls abgegeben hat.

2. Schaltungsanordnung nach Anspruch 1, dadurch gekennzeichnet,
daß die erste Logik aus einem Gatter (G1) besteht, das bei Vorliegen eines Impulses am Ausgang des Detektors (R, C, VG) oder bei Speicherung vorbestimmter Binärwerte in ausgewählten Zählstufen des Zählers (Z1) einen Impuls abgibt, daß während dieses Impulses der Zähler (Z1) läuft, wogegen bei Abwesenheit eines solchen Impulses der Zähler (Z1) mit einer Zahl geladen wird, die zur Speicherung anderer als der vorbestimmten Binärwerte in den ausgewählten Zählstufen führt.

3. Schaltungsanordnung nach Anspruch 1 oder 2,

dadurch gekennzeichnet,

daß die zweite Logik aus zwei UND-Gattern (G2, G3) mit zwei Eingängen besteht, daß jeweils einem Eingang der UND-Gatter (G1, G2) das Video-Synchronsignal (VCS) zugeführt wird und der andere Eingang eines jeden UND-Gatters (G2, G3) mit dem Ausgang eines Decoders (D1, D2) verbunden ist.

FIG.1a

FIG.1b

FIG.2